# EUROPEAN PATENT SPECIFICATION

(11) **EP 3 271 066 B1**
(45) Date of publication and mention of the grant of the patent: **27.02.2019**
(21) Application number: 16719506.4
(22) Date of filing: 17.03.2016
(51) Int. Cl.: B01J 19/08, B01J 19/12

(54) **STRUCTURE OF INTEGRATED PHOTOCHEMICAL REACTOR**
STRUKTUR EINES INTEGRIERTEN PHOTOCHEMISCHEN REAKTORS
STRUCTURE DE RÉACTEUR PHOTOCHIMIQUE INTÉGRÉ

(30) Priority: 20.03.2015 IT PI20150022
(43) Date of publication of application: 24.01.2018
(73) Proprietor: CNR - Consiglio Nazionale Delle Ricerche, 00185 Roma (IT)
(72) Inventor: LONGO, Iginio, 56123 Pisa (IT); FERRARI, Carlo, 56127 Pisa (IT)
(74) Representative: Celestino, Marco
(86) International application number: PCT/IB2016/051502
(87) International publication number: WO 2016/151439

(56) References cited:
- WO-A1-01/09924
- WO-A1-03/047318
- DE-A1- 10 236 717

## Description

### Field of the invention

The present invention relates to the field of photochemical reactions and in particular relates to an innovative photochemical reactor of integrated type.

In particular, the invention relates to a photochemical reactor that does not provide the use of electrodes.

### State of the art

As well known, a photochemical reaction is a chemical reaction that is induced and/or accelerated by the light. The energy that is necessary for the development of the chemical reaction is, in fact, provided by the photons that are absorbed by the chemical reagents or different photocatalytic materials, in case they are present.

Among the more known photochemical reactions there are the sterilization processes of gases and fluids. Other photochemical reactions are those that occur in the synthesis processes of particular substances, for example the vitamin D biosynthesis.

Many different typologies of photochemical reactors exist within which the photochemical reactions are conducted.

A first photochemical reactor of prior art comprises a tube made of fused quartz having a coil shape and positioned around a UV lamp. This type of photochemical reactor has an important drawback. In particular, the internal diameter of the tube made of quartz, of which the coil is made, cannot be miniaturized for structural reasons. Therefore, if the reagents consist of a solution of highly opaque liquids, that means absorbent to UV, VUV radiations, as almost in all the reactions of interest of the analytical chemistry happens, the radiations are not able to penetrate within the mass of reagents flowing in the tube, consequently decreasing the process efficiency.

Another drawback is represented by the position of the coil. This is, in fact, provided outside the source of optical radiation.

The above disclosed solution causes reflections of the optical radiations at the external surface of the coil. Therefore, in practice, these optical radiations are not involved in the process.

A further solution provides the use of a source of radiations consisting of an arc lamp, i.e. a lamp with metal electrodes arranged into contact with the plasma and between which a discharge is produced. The main drawbacks of this technical solution are a short life of the lamp, high production costs, the unavoidableness to have the *"sputtering",* i.e. a cathode pulverization, and the deposit of metal vapours on the internal walls of the lamp. Further drawbacks of this solution derive from the use of high-voltage electrodes, for isolation reasons and safety of use, and for the impossibility of using reactive metal vapours (like, for example, S, K, I, Na, etc.) for the production of spectral emissions of particular interest, because, as well known, these vapours are particularly reactive and provides chemical attacks of the electrodes.

A solution to the above problem is disclosed in DE10236717. In this case a photochemical reactor is provided comprising a reaction chamber that is defined by external walls and contains a plasma. The photochemical reactor is equipped, furthermore, with 2 electrodes arranged to produce an electromagnetic field within the reaction chamber. More precisely, the electrodes cause the discharge of the plasma contained within the reaction chamber in such a way to produce a UV light fed by a microwave radiation (MW). In order to avoid the drawback that has been disclosed with reference to the previous case, and in particular the direct contact of the electrodes with the plasma, which would cause, over time, a deterioration of the electrodes, jeopardizing, and therefore, the effectiveness and the life of the device, in this case the electromagnetic and microwave radiations are introduced within the reaction chamber by means of a waveguide. However, also this solution is not able to satisfactorily overcome the above disclosed drawbacks because of the use of electrodes.

### Summary of the invention

It is then an object of the present invention to provide a photochemical reactor that is able to overcome the above disclosed drawbacks of the prior art solutions.

It is, in particular, an object of the present invention to provide a photochemical reactor that allows to obtain a higher power density on the sample with respect to the solutions of prior art and therefore a higher efficiency of the reaction.

It is, furthermore, an object of the present invention to provide a photochemical reactor that allows to considerably reduce the reaction times with respect to the solutions of prior art.

It is another object of the present invention to provide a photochemical reactor that allows to reduce the amount of unused power of the radiation that is used.

It is further object of the present invention to provide a photochemical reactor that is able to homogeneously and uniformly treat the mass of reagents.

It is still another object of the present invention to provide a photochemical reactor that is highly versatile, because it can be used for a large range of reactions, and at the same time that is extremely reliable.

It is a particular object of the present invention to provide a photochemical reactor that is resistant to very high temperatures.

It is still another object of the present invention to provide a photochemical reactor that is economically than the photochemical reactors of prior art and that have a much longer average life than the same.

These and other objects are achieved by the structure of photochemical reactor, according to the invention, comprising:
- a hollow container body having a side wall in un chemically inert material and arranged to contain un excited luminous plasma with electromagnetic fields e defining a closed excitation chamber in which an excitable material is present, in use, in such a way to obtain a discharge of said excited luminous plasma by microwaves irradiation, said hollow container body being provided with:
   - at least a hollow which protrudes into said excitation chamber;
   - at least a source of microwave radiation positioned, in use, in said hollow, said source of microwave radiation arranged to emit said radiation in such a way to excite said excitable material producing said luminous plasma arranged to emit an optical radiation ad a predetermined wavelength;
   whose main characteristic is that the hollow is delimited by a wall that protrudes into the excitation chamber, whereby the source of microwave radiation is not into contact with the plasma and that is provided, furthermore, a reaction tube which, in use, passes through said excitation chamber in such a way to be immersed in said luminous plasma, said reaction tube arranged to contain, in use, predetermined chemical reagents and made of a material that is transparent to said predetermined optical radiation emitted by said luminous plasma, in such a way that said optical radiation is arranged to hit said chemical reagents in such a way to induce a predetermined photochemical reaction.

In particular, the photochemical reactor, according to the invention, does not provide the use of electrodes. Therefore, the present invention allows to avoid the drawbacks of the prior art solutions and in particular the deterioration of the electrodes for their direct contact with the plasma.

Advantageously, the wall of the hollow container body is made of a material transparent to a predetermined electromagnetic radiation.

In particular, the reaction container is fixed to said side wall of said hollow container body, for example by welding, in such a way to assure a complete isolation of the excitation chamber from the outside environment.

In particular, the, or each, hollow is a dead hole delimited by a wall that protrudes into said excitation chamber from the side wall of said hollow container body. In a different embodiment of the invention, instead, the hollow is a through hole that therefore passes right through the hollow container body.

More in detail, the wall of the hollow can coincide with the side wall of the hollow container body, or alternatively protrudes beyond the side wall of the hollow container body for a predetermined length.

Advantageously, a plurality of hollows is provided, each hollow of said plurality arranged to house, in use, a respective microwave source.

According to an embodiment of the invention, a plurality of reaction tubes is provided, each reaction tube of said plurality being immersed, in use, in said luminous plasma and arranged to contain respective chemical reagents of a predetermined photochemical reaction.

Preferably, the, or each, microwave source is a coaxial dipole antenna.

In particular, the, or each, reaction tube is associated to a shield configured in such a way to selectively blocks said microwaves produced by said, or each, microwave source, but to allow the passage of at least a predetermined electromagnetic radiation of interest emitted by said plasma.

In particular, the electromagnetic radiation of interest is selected from the group consisting of: the ultraviolet radiation, the visible radiation, the infrared radiation, or the vacuum ultraviolet radiation, or any combination thereof. In this way, it is possible to selectively induce said photochemical reaction in the reagents contained in said, or each, reaction tube.

For example, the shield can have a reticular structure.

Preferably, la reticular structure of the shield is made of metal.

In a different embodiment of the invention, the reaction tube is part of a double pipe.

More precisely, the double pipe comprises:
- the reaction tube containing said chemical reagents;
- a cooling duct coaxially arranged to the reaction tube and containing a cooling fluid, said cooling fluid arranged to cool the mass of the chemical reagents during the development of the photochemical reaction, in such a way to control the temperature of the photochemical reaction.

In an embodiment of the invention, the reaction tube is provided as a part of a circuit comprising a pumping device of the reagents, said pumping device arranged to produce a flow of material that passes, in use, through said reaction tube. In this case, the chemical reagents can flow through the circuit.

In a different embodiment provided by the invention, the, or each, reaction tube has a coil shape in such a way to increase the exchange surface through which the optical radiation emitted by the luminous plasma causes the chemical reagents to react photochemically.

The hollow container body can be made of a transparent fused quartz.

Advantageously, the, or each, reaction tube is made of a transparent fused quartz.

In particular, the transparent fused quartz, since it is transparent to the optical radiation emitted by the plasma, allows, on one hand, the optical radiation to reach the mass of chemical reagents that are present into the reaction tube and, on the other hand, it allows the development of photochemical reactions producing a high energy, in other words, it allows to operate in a large range of temperatures, thanks to the ability to be resistant to very high temperatures.

### Brief description of the drawings

The invention will be now shown with the following description of an exemplary embodiment, exemplifying but not limitative, with reference to the attached drawings in which:
- Figure 1A diagrammatically shows in an elevational side view a first embodiment of a photochemical reactor, according to the invention;
- Figure 2A diagrammatically shows the photochemical reactor of figure 1A in a longitudinal section view;

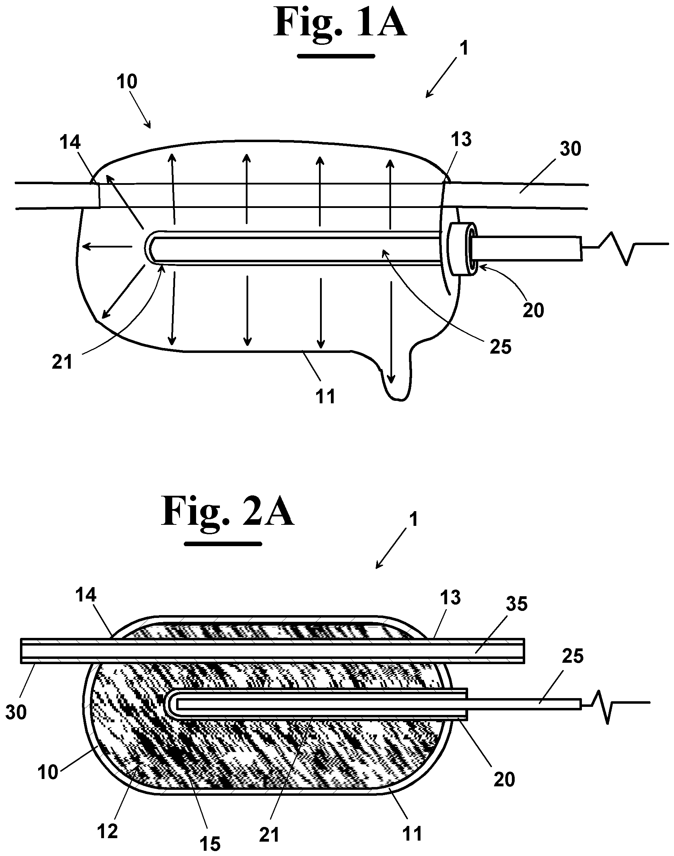

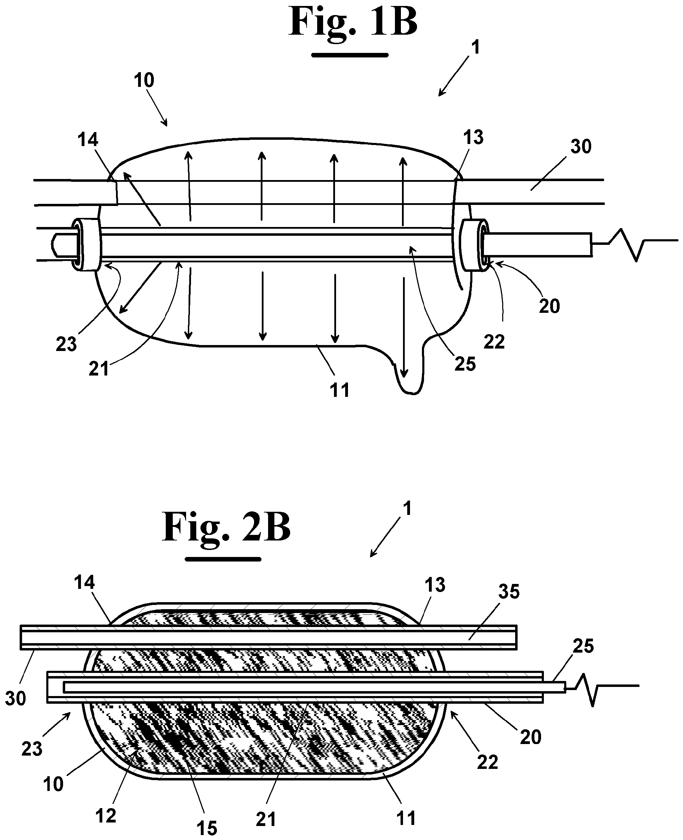

- Figures 1B and 2B diagrammatically show in a elevational side view and in a longitudinal section view, respectively, an alternative embodiment of the photochemical reactor of figures 1A and 2A, in which the hollow, which houses the antenna, is a through hole provided in the hollow container body;

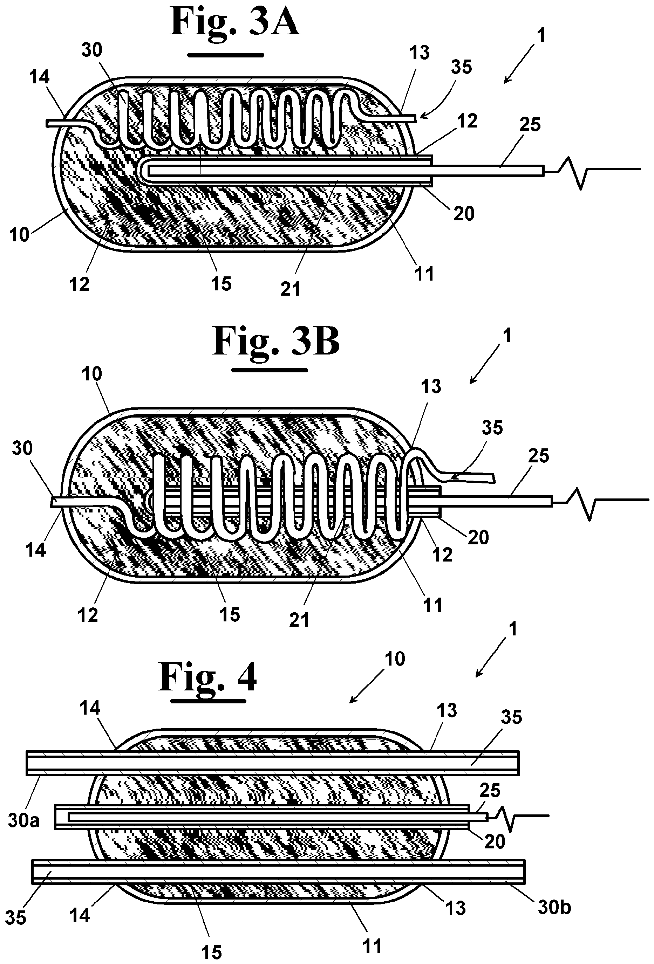

- Figures 3A to 6 show in longitudinal section views some alternative embodiments, according to the invention, of the photochemical reactor of figure 2;

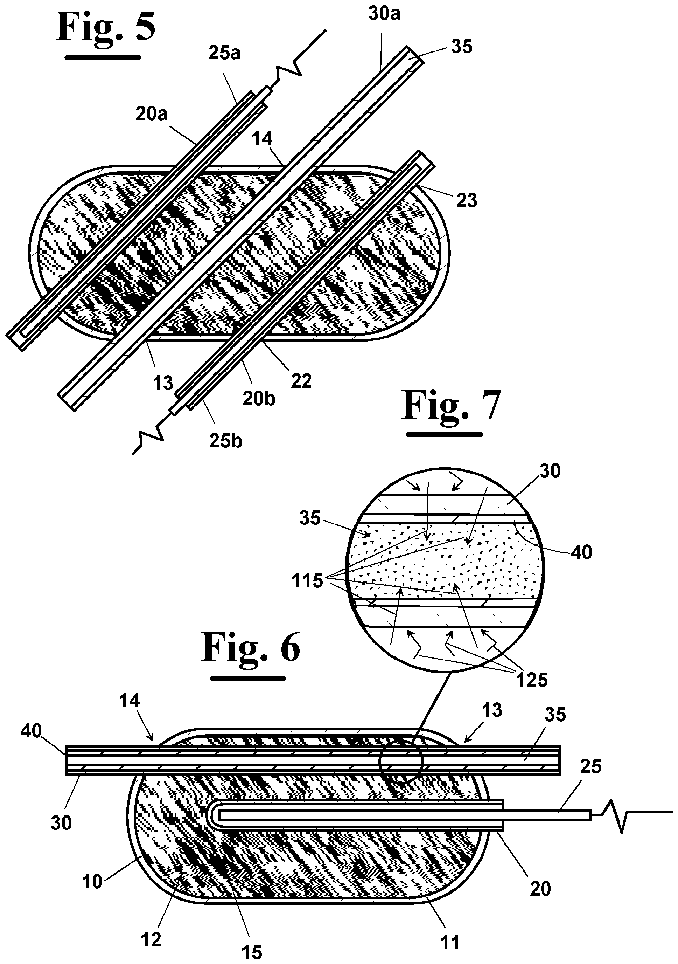

- Figure 7 shows in detail an enlargement of the embodiment of figure 6 that provides the use of a shield associated to the reaction tube;

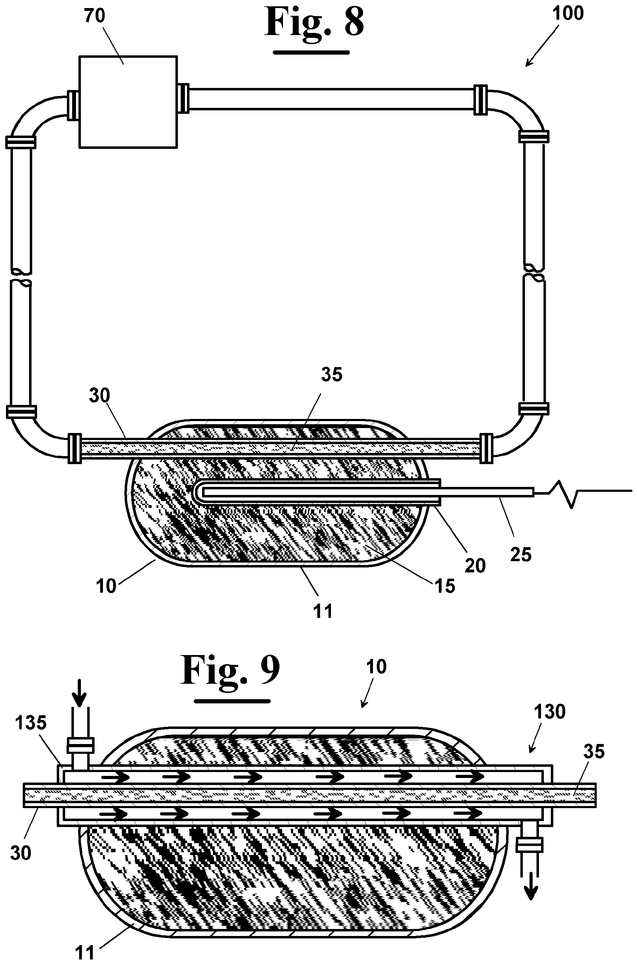

- Figures 8 and 9 show further embodiments of the photochemical reactor of figure 1.

### Detailed description of the invention

With reference, for example, to figures 1A and 2A, a structure of photochemical reactor 1, according to the invention, comprises a hollow container body 10, in particular a bulb, having a side wall 11 made of a chemically inert material, for example glass.

More precisely, the material can be transparent to the optical radiation, from the infrared to the vacuum ultraviolet radiation (VUV), and to the microwaves, for example fused quartz. Alternatively, the material can be opaque to the electromagnetic radiation, because the fields exciting the plasma does not come from the outside.

The side wall 11 delimits a closed excitation chamber 12 within which an excitable material 15 is contained, for example, a mixture of argon and mercury. The photochemical reactor 1 is provided with at least a hollow 20 made of a material that is transparent to the microwaves, within which, in use, is arranged a source of microwave radiation, preferably a coaxial dipole antenna 25. This is arranged to emit microwaves in such a way to excite the material that is contained within the excitation chamber 12. The excitation of the material 15 produces a luminous plasma, which emits an optical radiation having a predetermined wavelength, in particular ultraviolet, visible, or infrared, radiation to which the material in which the hollow container body 10 is made can be transparent, as above disclosed and analogously to what is described in detail in the patent EP1449411 in the name of the same Applicant.

According to the invention, the photochemical reactor 1 comprises, furthermore, at least a reaction tube 30 within which predetermined chemical reagents are provided. More precisely, the reaction tube 30 is fixed, for example welded, to the side wall 11 of the hollow container body 10, in such a way to assure that the excitation chamber 12 is isolated from the external environment. More in detail, the reaction tube 30 has, in use, at least a portion that is immersed in the luminous plasma.

Since the reaction tube 30 is made of a material that is transparent to the electromagnetic radiation produced by the luminous plasma, for example transparent fused quartz, the optical radiation emitted by the plasma is free to reach the reagents 35 contained within the reaction tube 30 inducing a predetermined photochemical reaction.

In particular, the present invention allows to arrange the chemical reagents 35, in which the photochemical reaction is induced, directly within the source of optical radiation, i.e. the plasma. Therefore, differently from the solutions of prior art, the radiations penetrate within the reaction tube 30 from every directions and making, therefore, particularly efficient the chemical activation of the reaction. Therefore, with respect to the known solutions, for the same energy that has been absorbed for exciting the material 15, i.e. for the same energy emitted by antenna 25, the sample, i.e. the mass of reagents, is subjected to a higher density of radiation power. This allows to reach a higher yield with respect to the known solutions.

Furthermore, the mass of chemical reagents 35 is irradiated from every direction and therefore a high uniformity in the treatment of the mass is achieved. This latter aspect is very important for the high value of the extinction coefficient of the VUV radiation in many of the materials that are used in the reactors of prior art that obliges to use very small volumes, or to accept a nonuniform treatment.

The possibility to be able to make both the reaction tube 30 and the hollow body 10 in transparent fused quartz allows to use the reactor 1 also for photochemical reactions that develops at high temperatures thus increasing the range of photochemical reactions that can be conducted using the reactor 1 according to the invention. This constructive solution allows, furthermore, to reduce as desired the thickness of the wall of the reaction tube 30 and therefore to further optimize the process.

As shown, for example, in figures 1A and 2A, the hollow 20 can be substantially a dead hole delimited by a wall 21 protruding into the excitation chamber 12 from the side wall 11 of the hollow container body 10.

In a different embodiment of the invention shown in figures 1B and 2B, instead, the hollow 20 is a through hole which crosses all the side wall 11 of the container body 10 between an inlet mouth 22 and an outlet mouth 23. More in detail, in the first case, the wall of the hollow 20 coincides with the wall of the hollow container body 10, whilst in the second case, the wall 21 of the hollow 20, for example made of fused quartz, or other transparent material, protrudes beyond the wall 11 of the hollow container body 10 for a predetermined length. In this latter case, the wall 21 of the hollow 20 is provided welded to the side wall 11 of the container body 10, analogously to what has been disclosed for the reaction tube 30. As diagrammatically shown in figures 2B, 4 and 5, furthermore, the hollow 20 can be a portion of an open tube, i.e. that is not closed neither at the first end nor at the other end.

In the embodiments of figures 3A and 3B, the, or each, reaction tube 30 has a coil shape. More precisely, in the case of figure 3A, the coil is arranged at a predetermined distance from the hollow 20, which houses the antenna 25, whilst in the case of figures 3B, the coil develops around the hollow 20. In this latter case all the electromagnetic, optical and microwave radiations, that are present in the plasma act on the reaction with axial rotation symmetry.

This solution allows, in particular, to increase the exchange surface between the mass of the chemical reagents and the luminous plasma and, thus, the optical radiation of interest.

In the different embodiment of the invention of figure 4, instead, a plurality of reaction tubes 30 is provided, for example 2 reaction tubes 30a and 30b, each of which immersed, in use, in the luminous plasma and arranged to contain respective chemical reagents, that are not necessarily different. In this way, it is possible to optimize the available volume increasing the yield of the photochemical reactor 1.

In figure 5, it is, instead, illustrated an embodiment which provides a plurality of hollows 20, in particular a first and a second hollow 20a e 20b, each of which arranged to house, in use, a respective microwave source 25a and 25b. In this case, thanks to the use of 2 microwave antennas 25, a higher radiation power is emitted in the excitable material 15 that is then excited in a more uniform way.

It is to be noted that, even though in the example of figure 5 is shown the case in which a hollow, and precisely the first hollow 20a, is a dead hole, whilst another hollow, and precisely the second hollow 20b, is a through hole passing through the container body 10 between an inlet mouth 22 and an outlet mouth 23, it is also provided the possibility, not shown in the figure for reasons of simplicity, that all the hollows 20 can be dead holes, or through holes, or that a part of the hollows can be dead holes and another part can be through holes.

In the exemplary embodiment shown in figures 6 and 7, the reaction tube 30 is associated to a shield 40 configured in such a way to selectively block the microwaves 125 produced by the, or each, microwave source 25, but to allow the passage of the electromagnetic radiation of interest 115, for example the UV radiation and/or the VUV radiation and/or the IR radiation, or the visible radiation. More in detail, the shield 40 can be positioned outside the external wall of the reaction tube 30, as shown in detail in figures 6 and 7, or within it.

In this way, it is, therefore, possible to selectively induce a photochemical reaction in the reagents 35 that are contained within the reaction tube 30. For example, the shield 40 can have a reticular structure and can be made of a metal material.

In the further embodiment of figure 8, the, or each, reaction tube 30 can be part of a circuit 100 comprising a pumping device 70 of the reagents 35. In particular, the pumping device 70 is arranged to produce a flow of chemical reagents which, in use, passes through the circuit 100 up to reach the reaction tube 30.

In a different embodiment of the invention, the reaction tube 30 is part of a double pipe 130 comprising a cooling duct 135 that is coaxially arranged to the reaction tube 30, in particular outside the same, and containing a predetermined cooling fluid (figure 9). In this way, it is possible to control the temperature of the photochemical reaction that occurs in the reaction tube 30, avoiding, in particular, that it can reach too much high temperatures.

## Claims

1. Structure of photochemical reactor (1) comprising:
- a hollow container body (10) having a side wall (11) in a chemically inert material and arranged to contain an excited luminous plasma con electromagnetic fields and defining a closed excitation chamber (12) in which an excitable material (15) is present in such a way to obtain a discharge of said excited luminous plasma by microwave irradiation, said hollow container body (10) being provided with:
- at least a hollow (20) which protrudes into said excitation chamber (12);
- at least a source of microwave radiation positioned in said hollow (20), said source of microwave radiation (25) arranged to emit said radiation, in such a way to excite said excitable material (15) producing said luminous plasma arranged to emit an optical radiation having a predetermined wavelength;
said photochemical reactor (1) **characterised in that** said hollow (20) is delimited by a wall (21) which protrudes into said excitation chamber (12), whereby said source of microwave radiation (25) is not into contact with said plasma **and in that** a reaction tube (30) is, furthermore, provided arranged to pass through said excitation chamber (12), in such a way to be immersed in said luminous plasma, said reaction tube (30) arranged to contain predetermined chemical reagents (35) and being made of a material transparent to said predetermined optical radiation emitted by said luminous plasma, in such a way that said optical radiation is arranged to hit said chemical reagents (35) in such a way to induce a predetermined photochemical reaction.

2. Structure of photochemical reactor (1), according to claim 1, wherein said reaction container (30) is fixed to said side wall (11) of said hollow container body (10), in such a way to assure a complete isolation of said excitation chamber (12) from the outside environment.

3. Structure of photochemical reactor (1), according to claim 1, wherein said, or each, hollow (20) is selected from the group consisting of:
- a dead hole delimited by a wall (21) which protrudes into said excitation chamber (12) from said side wall (11) of said hollow container body (10).
- a through hole arranged to pass through said side wall of said hollow container body (10) between an inlet mouth (22) and an outlet mouth (23).

4. Structure of photochemical reactor (1), according to any of the previous claims, wherein a plurality of hollows (20) is provided, each hollow (20) of said plurality being arranged to house, in use, a respective microwave source (25).

5. Structure of photochemical reactor (1), according to any of the previous claims, wherein a plurality of reaction tubes (30) is provided, each reaction tube (30) of said plurality being immersed, in use, in said luminous plasma and arranged to contain respective chemical reagents of a predetermined photochemical reaction.

6. Structure of photochemical reactor (1), according to any of the previous claims, wherein said, or each, microwave source (25) is a coaxial dipole antenna.

7. Structure of photochemical reactor (1), according to any of the previous claims, wherein said, or each, reaction tube (30) is associated to a shield (40) configured in such a way to selectively block said microwaves produced by said, or each, microwave source (25), but to allow the passage of at least a predetermined electromagnetic radiation of interest emitted by said plasma.

8. Structure of photochemical reactor (1), according to claim 7, wherein said electromagnetic radiation of interest is selected from the group consisting of:
- ultraviolet radiation;
- visible radiation;
- infrared radiation;
- vacuum ultraviolet radiation;
- or a combination thereof.

9. Structure of photochemical reactor (1), according to claim 7, wherein said shield (40) has a reticular structure.

10. Structure of photochemical reactor (1), according to claim 1, wherein said reaction tube (30) is part of a double pipe (130)

11. Structure of photochemical reactor (1), according to any of the previous claims, wherein said, or each, reaction tube (30) is provided as a part of a circuit (100) comprising a pumping device (70) arranged to produce a flow of material comprising said reagents (35) which is configured to pass through said, or each reaction tube (35).

12. Structure of photochemical reactor (1), according to any of the previous claims, wherein said, or each, reaction tube (30) has a coil shape, in such a way to increase the exchange surface through which said optical radiation emitted by said luminous plasma induce said photochemical reaction in said chemical reagents (35).

13. Structure of photochemical reactor (1), according to any of the previous claims, wherein said side wall (11) of said hollow container body (10) is made of a material that is transparent to a predetermined electromagnetic radiation.

14. Structure of photochemical reactor (1), according to any of the previous claims, wherein said hollow container body (10) is made of transparent fused quartz.

15. Structure of photochemical reactor (1), according to any of the previous claims, wherein, said, or each, reaction tube (30) is made of transparent fused quartz.

## Patentansprüche

1. Struktur eines photochemischen Reaktors (1), umfassend:
- einen hohlen Behälterkörper (10) mit einer Seitenwand (11) aus einem chemisch inerten Material und so angeordnet, dass ein erregtes leuchtendes Plasma mit elektromagnetischen Feldern darin aufgenommen werden kann, und wobei eine geschlossene Erregungskammer (12) definiert wird, in der sich ein erregbares Material (15) befindet, um eine Entladung des erregten leuchten Plasmas durch Mikrowellenbestrahlung zu erreichen, wobei der hohle Behälterkörper (10) bereitgestellt ist mit:
- mindestens einem Hohlraum (20), der in die Erregungskammer (12) vorsteht;
- mindestens einer Mikrowellenstrahlungsquelle, die in dem Hohlraum (20) positioniert ist, wobei die Mikrowellenstrahlungsquelle (25) so angeordnet ist, dass sie die Strahlung so emittiert, dass das erregbare Material (15) erregt wird, wobei das leuchtende Plasma erzeugt wird, um eine optische Strahlung mit einer vorbestimmten Wellenlänge zu emittieren;
wobei der photochemische Reaktor (1) **dadurch gekennzeichnet ist, dass** der Hohlraum (20) durch eine Wand (21) begrenzt ist, die in die Erregungskammer (12) vorsteht, wodurch sich die Mikrowellenstrahlungsquelle (25) nicht in Kontakt mit dem Plasma befindet, und wobei ferner eine Reaktionsröhre (30) bereitgestellt ist, die so angeordnet ist, dass sie durch die Erregungskammer (12) derart verläuft, dass sie in das leuchtende Plasma eintaucht, wobei die Reaktionsröhre (30) so angeordnet ist, dass sie vorbestimmte chemische Reagenzien (35) aufnimmt, und wobei sie aus einem Material besteht, das für die vorbestimmte optische Strahlung, die durch das leuchtende Plasma emittiert wird, transparent ist, so dass die optische Strahlung so angeordnet ist, dass sie so auf die chemischen Reagenzien (35) auftrifft, dass eine vorbestimmte chemische Reaktion induziert wird.

2. Struktur eines photochemischen Reaktors (1) nach Anspruch 1, wobei die Reaktionskammer (30) derart an der Seitenwand (11) des hohlen Behälterkörpers (10) fixiert ist, um eine vollständige Isolierung der Erregungskammer (12) von der äußeren Umgebung sicherzustellen.

3. Struktur eines photochemischen Reaktors (1) nach Anspruch 1, wobei der oder jeder Hohlraum (20) ausgewählt ist aus der Gruppe bestehend aus:
- einem durch eine Wand (21) begrenztem Sackloch, das von der Seitenwand (11) des genannten hohlen Behälterkörpers (10) in die Erregungskammer (12) vorsteht;
- einer Durchgangsbohrung, die so angeordnet ist, dass sie zwischen einer Eintrittsmündung (22) und einer Austrittsmündung (23) durch die Seitenwand des hohlen Behälterkörpers (10) verläuft.

4. Struktur eines photochemischen Reaktors (1) nach einem der vorstehenden Ansprüche, wobei eine Mehrzahl von Hohlräumen (20) bereitgestellt ist, wobei jeder Hohlraum (20) der Mehrzahl so angeordnet ist, dass er im Einsatz eine entsprechende Mikrowellenquelle (25) beherbergt.

5. Struktur eines photochemischen Reaktors (1) nach einem der vorstehenden Ansprüche, wobei eine Mehrzahl von Reaktionsröhren (30) bereitgestellt ist, wobei jede Reaktionsröhre (30) der Mehrzahl im Einsatz in das leuchtende Plasma eintaucht und so angeordnet ist, um entsprechende chemische Reagenzien einer vorbestimmten photochemischen Reaktion aufzunehmen.

6. Struktur eines photochemischen Reaktors (1) nach einem der vorstehenden Ansprüche, wobei die oder jede Mikrowellenquelle (25) eine koaxiale Dipolantenne ist.

7. Struktur eines photochemischen Reaktors (1) nach einem der vorstehenden Ansprüche, wobei die oder jede Reaktionsröhre (30) einem Schirm (40) zugeordnet ist, der so gestaltet ist, dass er selektiv die durch die oder jede Mikrowellenquelle (25) erzeugten Mikrowellen blockiert, jedoch das Hindurchtreten wenigstens einer durch das Plasma emittierten vorbestimmten relevanten elektromagnetischen Strahlung zulässt.

8. Struktur eines photochemischen Reaktors (1) nach Anspruch 7, wobei die relevante elektromagnetische Strahlung ausgewählt ist aus der Gruppe bestehend aus:
- ultravioletter Strahlung;
- sichtbarer Strahlung;
- Infrarotstrahlung;
- Vakuum-UV-Strahlung;
- oder einer Kombination dieser.

9. Struktur eines photochemischen Reaktors (1) nach Anspruch 7, wobei der Schirm (40) eine retikuläre Struktur aufweist.

10. Struktur eines photochemischen Reaktors (1) nach Anspruch 1, wobei die Reaktionsröhre (30) Teil eines Doppelrohres (130) ist.

11. Struktur eines photochemischen Reaktors (1) nach einem der vorstehenden Ansprüche, wobei die oder jede Reaktionsröhre (30) als Teil eines Kreises (100) bereitgestellt ist, der eine Pumpvorrichtung (70) umfasst, die angeordnet ist, um einen Materialfluss zu erzeugen, der die Reagenzien (35) umfasst, wobei der Fluss so gestaltet ist, dass er durch die oder jede Reaktionsröhre (35) verläuft.

12. Struktur eines photochemischen Reaktors (1) nach einem der vorstehenden Ansprüche, wobei die oder jede Reaktionsröhre (30) eine Spulenform aufweist, um die Austauschoberfläche zu vergrößern, wodurch die durch das leuchtende Plasma emittierte optische Strahlung die photochemische Reaktion in den chemischen Reagenzien (35) induziert.

13. Struktur eines photochemischen Reaktors (1) nach einem der vorstehenden Ansprüche, wobei die Seitenwand (11) des hohlen Behälterkörpers (10) aus einem Material besteht, das für eine vorbestimmte elektromagnetische Strahlung transparent ist.

14. Struktur eines photochemischen Reaktors (1) nach einem der vorstehenden Ansprüche, wobei der hohle Behälterkörper (10) aus transparentem Quarzglas besteht.

15. Struktur eines photochemischen Reaktors (1) nach einem der vorstehenden Ansprüche, wobei die oder jede Reaktionsröhre (30) aus transparentem Quarzglas besteht.

## Revendications

1. Structure de réacteur photochimique (1) comprenant :
un corps de récipient creux (10) ayant une paroi latérale (11) dans un matériau chimiquement inerte et conçu pour contenir un plasma lumineux excité avec des champs électromagnétiques et définissant une chambre d'excitation fermée (12) dans laquelle un matériau excitable (15) est présent de sorte à obtenir une décharge dudit plasma lumineux excité par rayonnement micro-ondes, ledit corps de récipient creux (10) comprenant :
au moins un creux (20) qui fait saillie dans ladite chambre d'excitation (12) ;
au moins une source de rayonnement micro-ondes positionnée dans ledit creux (20), ladite source de rayonnement micro-ondes (25) étant conçue pour émettre ledit rayonnement, de sorte à exciter ledit matériau excitable (15) produisant ledit plasma lumineux conçu pour émettre un rayonnement optique ayant une longueur d'onde prédéfinie ;
ledit réacteur photochimique (1) étant **caractérisé en ce que** ledit creux (20) est délimité par une paroi (21) qui fait saillie dans ladite chambre d'excitation (12), moyennant quoi ladite source de rayonnement micro-ondes (25) n'est pas en contact avec ledit plasma et **en ce qu'**un tube de réaction (30) est, en outre, conçu pour passer à travers ladite chambre d'excitation (12), de sorte à être immergé dans ledit plasma lumineux, ledit tube de réaction (30) étant conçu pour contenir des réactifs chimiques (35) prédéfinis et étant constitué d'un matériau transparent pour ledit rayonnement optique prédéfini émis par ledit plasma lumineux, de sorte que ledit rayonnement optique soit conçu pour frapper lesdits réactifs chimiques (35) de sorte à provoquer une réaction photochimique prédéfinie.

2. Structure de réacteur photochimique (1) selon la revendication 1, ledit récipient de réaction (30) étant fixé à ladite paroi latérale (11) dudit corps de récipient creux (10), de sorte à assurer une isolation complète entre ladite chambre d'excitation (12) et l'environnement extérieur.

3. Structure de réacteur photochimique (1) selon la revendication 1, ledit ou chaque creux (20) étant choisi dans le groupe constitué par :
un trou borgne délimité par une paroi (21) qui fait saillie dans ladite chambre d'excitation (12) depuis ladite paroi latérale (11) dudit corps de récipient creux (10),
un trou traversant pratiqué pour passer à travers ladite paroi latérale dudit corps de récipient creux (10) entre une bouche d'entrée (22) et une bouche de sortie (23).

4. Structure de réacteur photochimique (1) selon l'une quelconque des revendications précédentes, une pluralité de creux (20) étant fournie, chaque creux (20) de ladite pluralité étant conçu pour accueillir, lors de l'utilisation, une source de micro-ondes (25) respective.

5. Structure de réacteur photochimique (1) selon l'une quelconque des revendications précédentes, une pluralité de tubes de réaction (30) étant fournie, chaque tube de réaction (30) de ladite pluralité étant immergé, lors de l'utilisation, dans ledit plasma lumineux et conçu pour contenir des réactifs chimiques respectifs d'une réaction photochimique prédéfinie.

6. Structure de réacteur photochimique (1) selon l'une quelconque des revendications précédentes, ladite ou chaque source de micro-ondes (25) étant une antenne dipôle coaxiale.

7. Structure de réacteur photochimique (1) selon l'une quelconque des revendications précédentes, ledit ou chaque tube de réaction (30) étant associé à un écran (40) conçu de sorte à bloquer sélectivement lesdites micro-ondes produites par ladite ou chaque source de micro-ondes (25), mais pour permettre le passage d'au moins un rayonnement électromagnétique d'intérêt prédéfini émis par ledit plasma.

8. Structure de réacteur photochimique (1) selon la revendication 7, ledit rayonnement électromagnétique d'intérêt étant choisi dans le groupe constitué par :
les rayonnements ultraviolets ;
les rayonnements visibles ;
les rayonnements infrarouges ;
les rayonnements ultraviolets sous vide ;
ou une combinaison associée.

9. Structure de réacteur photochimique (1) selon la revendication 7, ledit écran (40) ayant une structure réticulaire.

10. Structure de réacteur photochimique (1) selon la revendication 1, ledit tube de réaction (30) faisant partie d'une conduite double (130).

11. Structure de réacteur photochimique (1) selon l'une quelconque des revendications précédentes, ledit ou chaque tube de réaction (30) étant fourni en tant que partie d'un circuit (100) comprenant un dispositif de pompage (70) conçu pour produire un flux de matière comprenant lesdits réactifs (35) qui est conçu pour traverser ledit ou chaque tube de réaction (35).

12. Structure de réacteur photochimique (1) selon l'une quelconque des revendications précédentes, ledit ou chaque tube de réaction (30) ayant une forme de bobine, de sorte à augmenter la surface d'échange par laquelle ledit rayonnement optique émis par ledit plasma lumineux induit ladite réaction photochimique dans lesdits réactifs chimiques (35).

13. Structure de réacteur photochimique (1) selon l'une quelconque des revendications précédentes, ladite paroi latérale (11) dudit corps de récipient creux (10) étant constitué d'un matériau qui est transparent à un rayonnement électromagnétique prédéfini.

14. Structure de réacteur photochimique (1) selon l'une quelconque des revendications précédentes, ledit corps de récipient creux (10) étant constitué de quartz fondu transparent.

15. Structure de réacteur photochimique (1) selon l'une quelconque des revendications précédentes, ledit ou chaque tube de réaction (30) étant constitué de quartz fondu transparent.
